# EUROPEAN PATENT SPECIFICATION

(11) **EP 3 504 783 B1**
(45) Date of publication and mention of the grant of the patent: **14.12.2022**
(21) Application number: 17860163.9
(22) Date of filing: 11.10.2017
(51) Int. Cl.: H01F 27/28, H01F 27/34, H01F 27/00, H02M 3/156

(54) **SANDWICH WOUND INDUCTANCE**
SANDWICH-WICKELINDUKTANZ
INDUCTANCE À ENROULEMENT EN SANDWICH

(30) Priority: 12.10.2016 CN 201610890756
(43) Date of publication of application: 03.07.2019
(73) Proprietor: Tridonic GmbH & Co KG, 6851 Dornbirn (AT)
(72) Inventor: LIN, Yaofeng, Shenzhen Guangdong (CN)
(74) Representative: Rupp, Christian
(86) International application number: PCT/CN2017/105738
(87) International publication number: WO 2018/068734

(56) References cited:
- CN-A- 101 834 529
- CN-A- 102 290 030
- CN-A- 103 700 473
- US-A- 4 500 833
- US-A- 5 038 263

## Description

### Technical field

The present invention relates to the field of inductors, in particular to a sandwich wound inductance.

### Background art

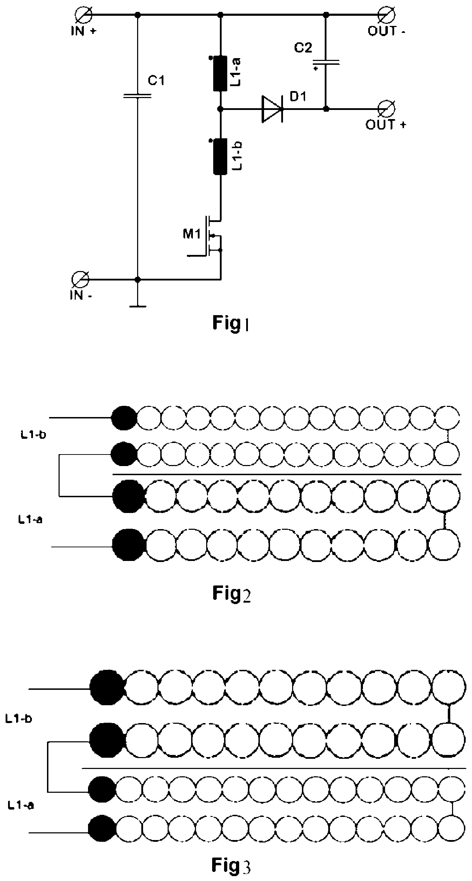

An inductor is one of the key components in buck-boost circuits, buck circuits and boost circuits. In the prior art, a common inductance structure is two independent windings connected together in series, wherein one winding serves as an output winding. Fig. 1 shows an inductor application scenario, namely a structure in which two windings are connected in series in a typical buck-boost circuit, wherein IN+ and IN-are circuit input ends, C1 is an input end filter capacitor, M1 is a MOSFET (metal oxide semiconductor field effect transistor), and the two windings L1-a and L1-b are connected in series with each other, together forming an inductor. Winding Ll-a, as the output winding, supplies power to a circuit output end load. D1 is a diode, C2 is an output end capacitor, and OUT+ and OUT- are circuit output ends. Figs. 2 and 3 are schematic diagrams of two sectional structures of the two windings L1-a and L1-b in fig. 1, wherein winding L1-b is wound using a conductive wire with a smaller wire diameter in fig. 2, and winding L1-b is wound using a conductive wire with a larger wire diameter in fig. 3, to meet the demand for different current-carrying capacities of the output winding.

When the abovementioned inductance is used in buck-boost circuits, buck circuits and boost circuits, the problem of high leakage inductance due to poor coupling is encountered, resulting in the voltage peak value such as overheating of windings during operation, thereby lowering circuit efficiency and shortening component life.

The document US 4 500 833 A shows a switched mode power supply transformer, particularly for a television receiver, having a plurality of inductor windings.

### Content of the invention

The object of the present invention is to provide a sandwich wound inductance, to increase inductive coupling and decrease leakage inductance, ameliorate winding overheating, and increase circuit efficiency.

The invention is defined in the independent claims.

Advantageous features are defined in the dependent claims.

To achieve the abovementioned object, the present invention provides a sandwich wound inductance (or also called sandwich winding inductor) according to claim 1.

As an optional solution, the sandwich wound inductance further comprises: a fourth winding connected in series with the first winding and the second winding.

As an optional solution, the sandwich wound inductance further comprises: multiple windings connected in series with the first winding and the second winding.

As an optional solution, the sandwich wound inductance further comprises: multiple windings connected in series with the first winding and the second winding.

As an optional solution, the sandwich wound inductance further comprises: one or more windings, for connecting in parallel with the fourth winding or the multiple windings connected in series with the first winding and the second winding.

As an optional solution, the sandwich wound inductance further comprises: one or more windings connected in parallel with the third winding.

As an optional solution, the first winding and the second winding are wound using the same conductive wire.

As an optional solution, the first winding and the third winding have the same number of turns.

As an optional solution, the sandwich wound inductance is used for a buck-boost circuit, a buck circuit or a boost circuit.

The invention also relates to a driver for operating a light source, preferably a LED, comprising a clocked converter comprising a switch and a sandwich winding inductor according to the invention.

The present invention has the following advantages:
Taking the prior art as a foundation, the sandwich wound inductance provided in the present invention adds the third winding connected in parallel with the first winding, with these together serving as the output winding, or the second winding alone serving as the output winding. Moreover, a sandwich winding method is used to wind the inductance, with one or more windings used as an output being wound between one or more windings used as a non-output, or one or more windings used as a non-output being wound between one or more windings used as an output. This can effectively improve inductor coupling, reduce leakage inductance, and increase circuit efficiency. According to the actual boost/buck demands of a circuit, the current-carrying capacity of windings can be enhanced by adding a parallel-connected winding, thereby ameliorating the problem of heating in windings with large overcurrent. By using the same conductive wire to wind series-connected windings, in conjunction with an actual process of winding and producing an inductor, the manufacturing cost of the inductor at the time of production can be reduced. By having the same number of turns wound on the parallel-connected windings, the inductive coupling is further increased while the current-carrying capacity is increased.

In summary, the sandwich wound inductance provided in the present invention increases inductor coupling, reduces leakage inductance, and increases circuit efficiency; at the same time, in conjunction with actual circuit demands and a production process, it reduces inductor manufacturing costs, and is flexibly suited to buck-boost circuits, buck circuits or boost circuits with different buck/boost demands.

### Description of the accompanying drawings

Fig. 1 is a schematic application diagram of a two-winding inductance in a typical circuit in the prior art.
Figs. 2 and 3 are two schematic diagrams of the two-winding inductance in fig. 1.
Fig. 4 is a schematic application diagram of a sandwich wound inductance provided in an embodiment of the present invention.
Fig. 5 is a schematic diagram of the sandwich wound inductance in fig. 4.
Fig. 6 is a schematic application diagram of a sandwich wound inductance provided in an embodiment of the present invention.
Fig. 7 is a schematic diagram of the sandwich wound inductance in fig. 6.

### Particular embodiments

The present invention is explained in further detail below with reference to the accompanying drawings and particular embodiments.

A sandwich wound inductance provided in the present invention comprises: a first winding, a second winding and a third winding, wherein the first winding and the second winding are connected in series; the third winding and the first winding are connected in parallel; the first winding, second winding and third winding are wound by a sandwich winding method.

According to the invention, the sandwich winding method comprises: one or more windings used as an output being wound between one or more windings used as a non-output; or one or more windings used as a non-output being wound between one or more windings used as an output.

According to the invention, the first winding and the third winding together serve as an output winding, or the second winding serves as an output winding.

Taking prior art as a foundation, when the third winding is added and connected in parallel with the first winding, with these together serving as the output winding, a scenario in which an output winding needs a large current-carrying capacity can be satisfied, ameliorating the problem of output winding heating. Correspondingly, if a winding serving as an output only needs a low current-carrying capacity, and a non-output winding needs a large current-carrying capacity, then the second winding alone can serve as the output winding, ameliorating the problem of non-output winding heating. In addition, using a sandwich winding method to wind the inductance, with a winding used as an output being wound between non-output windings, or a non-output winding being wound between output windings, or output windings and non-output windings being wound in an alternately laminated manner, inductor coupling can be improved to different degrees in each case, reducing leakage inductance and increasing circuit efficiency.

Optionally, the sandwich wound inductance further comprises a winding for connecting in series with the first winding and the second winding; in an embodiment provided in the present invention, the added winding may be referred to as a fourth winding. Through the addition of the fourth winding, a four-winding sandwich wound inductance may be formed on the basis of a three-winding sandwich wound inductance, further improving inductor coupling, reducing leakage inductance, and increasing circuit efficiency.

Optionally, the sandwich wound inductance further comprises multiple windings connected in series with the first winding and the second winding. Similarly to the principle of an optional solution mentioned above, taking as a foundation the use of a sandwich winding method between windings to wind and form an inductor, the addition of more windings will impart better coupling to the inductor as a whole. Furthermore, the addition of one or more windings connected in series with the first winding and the second winding also makes possible multi-path output for sandwich wound inductance load, i.e. makes it possible for multiple series-connected windings to supply power to multiple circuit loads respectively.

Optionally, taking as a foundation the two optional solutions described above in which series-connected windings are added, the sandwich wound inductance further comprises: one or more windings, for connecting in parallel with one or more windings connected in series with the first winding and the second winding. Taking as a foundation the addition of one or more windings connected in series with the first winding and the second winding in the sandwich wound inductance, the use of one or more windings for connecting in parallel with these additional series-connected windings may be applied to a scenario in which the inductor is used as the multi-path output in the optional solution described above, for the purpose of enhancing the current-carrying capacity of the windings, and improving the heating situation in windings with high overcurrent; at the same time, the addition of more windings will impart better coupling to the inductor as a whole.

Optionally, the sandwich wound inductance further comprises one or more windings connected in parallel with the third winding. Taking as a foundation the parallel connection of the first winding with the third winding, further addition of a parallel-connected winding is an optional solution for further enhancing the current-carrying capacity of the windings.

Optionally, the first winding and the second winding are wound using the same conductive wire. According to the buck/boost demands of different circuits, during the actual production process in which an inductor is wound, the use of conductive wires with different wire diameters to wind multiple series-connected windings necessitates conductive wire cutting, changing and connecting actions; in an embodiment of the present invention, the use of one conductive wire to continuously wind series-connected windings effectively simplifies the inductor winding process, reducing the inductor manufacturing cost and increasing production efficiency.

Optionally, the first winding and the third winding have the same number of turns. The reason for this is that when parallel-connected windings have the same number of turns, inductor coupling can be better.

Optionally, the sandwich wound inductance is suitable for a buck-boost circuit, a buck circuit or a boost circuit. The structure of the sandwich wound inductance provided in an embodiment of the present invention is suitable for the types of circuit mentioned above, but this does not restrict the use of the present invention in other types of circuit with the same or similar principles.

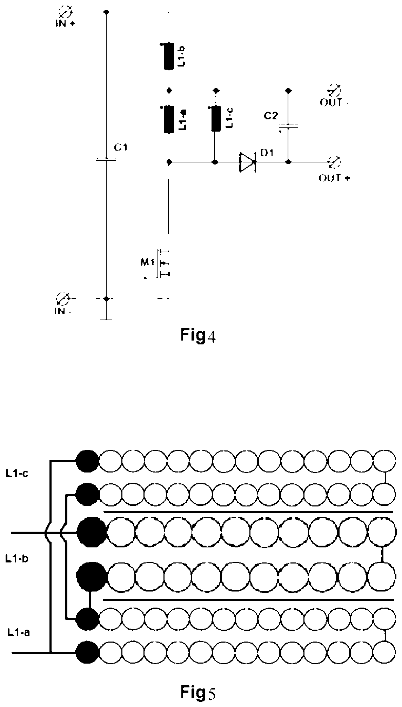

Fig. 4 shows a schematic application diagram of a sandwich wound inductance provided in an embodiment of the present invention, whereas fig. 5 shows a schematic diagram of the sandwich wound inductance in fig. 4. Fig. 4 shows a clocked converter comprising a switch M1 and a sandwich winding inductor according to the invention. The clocked converter comprising a switch M1 and a sandwich winding inductor according to the invention may form a part of a driver for operating a light source, preferably a LED.

IN+ and IN- are circuit input ends and may be fed with a DC supply voltage which may be supplied from a rectified AC voltage or from a power factor correction circuit. C1 is an input end filter capacitor and may stabilize the input voltage which is a DC voltage. M1 is a switch (e.g. MOSFET or bipolar transistor) which is preferably clocked at high frequency. The power transferred by the clocked converter may be controlled by variation of the duty cycle at which the switch M1 is operated, e.g. by pulse width modulation or another kind of pulse modulation. D1 is a diode which acts as rectifiying diode and which takes over the current from the output winding to the output end capacitor. C2 is an output end capacitor which stabilizes the output voltage. OUT+ and OUT- are circuit output ends to which a load may be connected, preferably a light source, e.g. a LED.

A first winding L1-a and a second winding L1-b are connected in series; a third winding L1-c and the first winding L1-a are connected in parallel, and together serve as an output winding, so the current-carrying capacity of the windings used as an output is enhanced, and the second winding L1-b is used as a non-output winding. By using a sandwich winding method, having the second winding L1-b wound in a layer between the first winding L1-a and the third winding L1-c is a scenario in which one or more windings used as a non-output are wound between one or more windings used as an output; such a sandwich wound inductance, compared with the prior art, can effectively increase inductor coupling, reduce leakage inductance and improve circuit efficiency.

It should be noted that the sandwich winding method in fig. 5 is merely one method of sandwich winding for a three-winding inductance in an embodiment of the present invention. Those skilled in the art should know that many other types of sandwich winding method also exist, with one or more windings used as an output being wound between one or more windings used as a non-output; or one or more windings used as a non-output being wound between one or more windings used as an output.

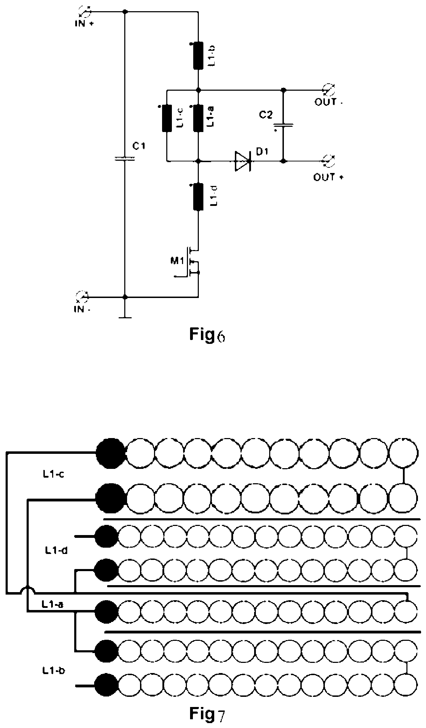

Fig. 6 shows a schematic application diagram of a sandwich wound inductance provided in an embodiment of the present invention; fig. 7 is a schematic diagram of the sandwich wound inductance in fig. 6.

The circuit shown in Fig. 6 is similar to the example of Fig. 4 and shows again a clocked converter comprising a switch M1 and a sandwich winding inductor according to the invention. The clocked converter comprising a switch M1 and a sandwich winding inductor according to the invention may form a part of a driver for operating a light source, preferably a LED.

IN+ and IN- are circuit input ends, C1 is an input end filter capacitor, M1 is a switch (e.g. MOSFET), D1 is a diode, C2 is an output end capacitor, and OUT+ and OUT-are circuit output ends. A first winding L1-a and a second winding L1-b are connected in series; a third winding L1-c and the first winding L1-a are connected in parallel, and together serve as an output winding, so the current-carrying capacity of the windings used as an output is enhanced. A fourth winding L1-d is also added, connected in series with the first winding L1-a and the second winding Ll-b, together serving as a non-output winding. Having the first winding L1-a and the third winding L1-c, which are used as an output, wound in an alternately laminated manner with the non-output second winding L1-b and fourth winding L1-d, by a sandwich winding method, is a scenario in which one or more windings used as an output are wound between one or more windings used as a non-output. Compared with the three-winding sandwich wound inductance shown in fig. 5, such a four-winding sandwich wound inductance further increases inductor coupling, thereby achieving the technical effects of reducing leakage inductance and increasing circuit efficiency. Furthermore, the use of the same conductive wire to wind the series-connected first winding L1-a, second winding L1-b and fourth winding L1-d reduces the inductor manufacturing cost.

It should be noted that the sandwich winding method in fig. 7 is merely one method of sandwich winding for a four-winding inductance in an embodiment of the present invention. Those skilled in the art should know that many other types of sandwich winding method also exist, wherein one or more windings used as an output may be wound between one or more windings used as a non-output; or one or more windings used as a non-output are wound between one or more windings used as an output. For example, the first winding L1-a and third winding L1-c used as an output are wound between the non-output second winding L1-b and fourth winding L1-d, with the second winding L1-b and the fourth winding L1-d serving as an innermost layer and an outermost layer respectively, or the non-output second winding L1-b and fourth winding L1-d are wound between the first winding L1-a and third winding L1-c used as an output, with the first winding L1-a and third winding L1-c serving as an innermost layer and an outermost layer respectively. Finally, it should be explained that the embodiments above are merely intended to explain the technical solution of the present invention, without limiting it.

## Claims

1. Sandwich wound inductance comprising:
a first winding (L1-a), a second winding (L1-b) and a third winding (L1-c), wherein the first winding (L1-a) and the second winding (L1-b) are connected in series, the third winding (L1-c) and the first winding (L1-a) are connected in parallel, and the first winding (L1-a), the second winding (L1-b) and the third winding (L1-c) are wound in a sandwich winding way, wherein the sandwich winding comprises: one or more windings used as an output winding being wound between one or more windings used as a non-ouput winding;
or one or more windings used as a non-output winding being wound between one or more windings used as an output winding,
wherein the first winding (L1-a) and the third winding (L1-c) together serve as the output winding and the second winding (L1-b) serves as the non-output winding, or
wherein the second winding (L1-b) serves as the output winding and the first winding (L1-a) and the third winding (L1-c) together serve as the non-output winding.

2. Sandwich wound inductance according to Claim 1 further comprising:
a fourth winding (L1-d) connected in series with the first winding (L1-a) and the second winding (L1-b).

3. Sandwich wound inductance according to Claim 1, further comprising:
multiple windings connected in series with the first winding (L1-a) and the second winding (L1-b) .

4. Sandwich wound inductance according to Claim 3, further comprising:
one or more windings, for connecting in parallel with the fourth winding (L1-d) or the multiple windings connected in series with the first winding (L1-a) and the second winding (L1-b).

5. Sandwich wound inductance according to one of the Claims 1 to 4, further comprising:
one or more windings connected in parallel with the third winding (L1-c).

6. Sandwich wound inductance according to one of the Claims 1 to 5, wherein the first winding (L1-a) and the second winding (L1-b) are wound using the same conductive wire.

7. Sandwich wound inductance according to one of the Claims 1 to 6, wherein the first winding (L1-a) and the third winding (L1-c) have the same number of turns.

8. Sandwich wound inductance according to one of the Claims 1 to 7, wherein the sandwich wound inductance is used for a buck-boost circuit, a buck circuit or a boost circuit.

9. Driver for operating a light source, preferably a LED, comprising a clocked converter comprising a switch (M1) and a sandwich wound inductance according to one of the claims 1 to 8.

## Patentansprüche

1. Sandwichwickelinduktivität, umfassend:
eine erste Wicklung (L1-a), eine zweite Wicklung (L1-b) und eine dritte Wicklung (L1-c), wobei die erste Wicklung (L1-a) und die zweite Wicklung (L1-b) in Reihe geschaltet sind, die dritte Wicklung (L1-c) und die erste Wicklung (L1-a) parallel geschaltet sind, und die erste Wicklung (L1-a), die zweite Wicklung (L1-b) und die dritte Wicklung (L1-c) auf eine Sandwichwickelart gewickelt sind, wobei die Sandwichwicklung umfasst: eine oder mehrere Wicklungen, die als eine Ausgangswicklung verwendet werden, die zwischen einer oder mehreren Wicklungen verwendet wird, die als eine Nicht-Ausgangswicklung verwendet werden;
oder eine oder mehrere Wicklungen, die als eine Nicht-Ausgangswicklung verwendet werden, die zwischen einer oder mehreren Wicklungen gewickelt ist, die als Ausgangswicklung verwendet werden,
wobei die erste Wicklung (L1-a) und die dritte Wicklung (L1-c) zusammen als die Ausgangswicklung dienen und die zweite Wicklung (L1-b) als die Nicht-Ausgangswicklung dient, oder
wobei die zweite Wicklung (L1-b) als die Ausgangswicklung dient und die erste Wicklung (L1-a) und die dritte Wicklung (L1-c) zusammen als die Nicht-Ausgangswicklung dienen.

2. Sandwichwickelinduktivität nach Anspruch 1, ferner umfassend:
eine vierte Wicklung (L1-d), die mit der ersten Wicklung (L1-a) und der zweiten Wicklung (L1-b) in Reihe geschaltet ist.

3. Sandwichwickelinduktivität nach Anspruch 1, ferner umfassend:
mehrere Wicklungen, die mit der ersten Wicklung (L1-a) und der zweiten Wicklung (L1-b) in Reihe geschaltet sind.

4. Sandwichwickelinduktivität nach Anspruch 3, ferner umfassend:
eine oder mehrere Wicklungen zum Parallelschalten mit der vierten Wicklung (L1-d) oder den mehreren Wicklungen, die mit der ersten Wicklung (L1-a) und der zweiten Wicklung (L1-b) in Reihe geschalten sind.

5. Sandwichwickelinduktivität nach einem der Ansprüche 1 bis 4, ferner umfassend:
eine oder mehrere Wicklungen, die parallel zu der dritten Wicklung (L1-c) geschaltet sind.

6. Sandwichwickelinduktivität nach einem der Ansprüche 1 bis 5, wobei die erste Wicklung (L1-a) und die zweite Wicklung (L1-b) unter Verwendung des gleichen leitfähigen Drahts gewickelt sind.

7. Sandwichwickelinduktivität nach einem der Ansprüche 1 bis 6, wobei die erste Wicklung (L1-a) und die dritte Wicklung (L1-c) die gleiche Anzahl von Windungen aufweisen.

8. Sandwichwickelinduktivität nach einem der Ansprüche 1 bis 7, wobei die Sandwichwickelinduktivität für eine Buck-Boost-Schaltung, eine Buck-Schaltung oder eine Boost-Schaltung verwendet wird.

9. Treiber zum Betreiben einer Lichtquelle, vorzugsweise einer LED, umfassend einen getakteten Wandler, umfassend einen Schalter (M1) und eine Sandwichwickelinduktivität nach einem der Ansprüche 1 bis 8.

## Revendications

1. Inductance enroulée en sandwich comprenant :
un premier enroulement (L1-a), un deuxième enroulement (L1-b) et un troisième enroulement (L1-c), dans laquelle le premier enroulement (L1-a) et le deuxième enroulement (L1-b) sont connectés en série, le troisième enroulement (L1-c) et le premier enroulement (L1-a) sont connectés en parallèle, et le premier enroulement (L1-a), le deuxième enroulement (L1-b) et le troisième enroulement (L1-c) sont enroulés à la manière d'un enroulement en sandwich, dans laquelle l'enroulement en sandwich comprend : un ou plusieurs enroulements utilisés en tant qu'enroulement de sortie étant enroulés entre un ou plusieurs enroulements utilisés en tant qu'enroulement non de sortie ;
ou un ou plusieurs enroulements utilisés en tant qu'enroulement non de sortie étant enroulés entre un ou plusieurs enroulements utilisés en tant qu'enroulement de sortie,
dans laquelle le premier enroulement (L1-a) et le troisième enroulement (L1-c) servent ensemble d'enroulement de sortie et le deuxième enroulement (L1-b) sert d'enroulement non de sortie, ou
dans laquelle le deuxième enroulement (L1-b) sert d'enroulement de sortie et le premier enroulement (L1-a) et le troisième enroulement (L1-c) servent ensemble d'enroulement non de sortie.

2. Inductance enroulée en sandwich selon la revendication 1 comprenant en outre :
un quatrième enroulement (L1-d) connecté en série au premier enroulement (L1-a) et au deuxième enroulement (L1-b).

3. Inductance enroulée en sandwich selon la revendication 1, comprenant en outre :
de multiples enroulements connectés en série au premier enroulement (L1-a) et au deuxième enroulement (L1- b).

4. Inductance enroulée en sandwich selon la revendication 3, comprenant en outre :
un ou plusieurs enroulements, pour connexion en parallèle avec le quatrième enroulement (L1-d) ou les multiples enroulements connectés en série au premier enroulement (L1-a) et au deuxième enroulement (L1-b).

5. Inductance enroulée en sandwich selon l'une des revendications 1 à 4, comprenant en outre :
un ou plusieurs enroulements connectés en parallèle avec le troisième enroulement (L1-c).

6. Inductance enroulée en sandwich selon l'une des revendications 1 à 5, dans laquelle le premier enroulement (L1-a) et le deuxième enroulement (L1-b) sont enroulés en utilisant le même fil conducteur.

7. Inductance enroulée en sandwich selon l'une des revendications 1 à 6, dans laquelle le premier enroulement (L1-a) et le troisième enroulement (L1-c) ont le même nombre de spires.

8. Inductance enroulée en sandwich selon l'une des revendications 1 à 7, dans laquelle l'inductance enroulée en sandwich est utilisée pour un circuit abaisseur-élévateur, un circuit abaisseur ou un circuit élévateur.

9. Circuit de pilotage pour faire fonctionner une source de lumière, de préférence une DEL, comprenant un convertisseur cadencé comprenant un commutateur (M1) et une inductance enroulée en sandwich selon l'une des revendications 1 à 8.
